Europäisches Patentamt

**European Patent Office**

Office européen des brevets

(19)

(11) Publication number: **0 193 376**
A1

# (12) EUROPEAN PATENT APPLICATION

(21) Application number: **86301325.6**

(22) Date of filing: **24.02.86**

(51) Int. Cl.⁴: **H 04 L 11/20**
**H 04 L 11/16**

(30) Priority: **25.02.85 GB 8504810**

(43) Date of publication of application:
**03.09.86 Bulletin 86/36**

(84) Designated Contracting States:
**DE FR**

(71) Applicant: **The General Electric Company, p.l.c.**
**1 Stanhope Gate**
**London W1A 1EH(GB)**

(72) Inventor: **Newman, Peter**
**23 Floriston Court Whitton Avenue East**
**Northolt Middlesex UB5 4JX(GB)**

(74) Representative: **Dolwin, John Davison**
**Central Patent Department Wembley Office The General**
**Electric Company, p.l.c. Hirst Research Centre East Lane**
**Wembley Middlesex HA9 7PP(GB)**

(54) A local communication system for the integrated transmission of speech and digital data.

(57) The invention concerns a two-way local communication system having *two paths,* a first one (1) for circuit-switched channels in time division multiplex and the second (2) carrying packet switched data. In such a system collision of packet data between stations is prevented by deriving a timing signal from channel synchronisation data transmitted over the first path so that a station (3) of the network only transmits packet data on receipt of this timing signal.

EP 0 193 376 A1

./...

## A Local Communication System for the Integrated
## Transmission of Speech and Digital Data

This invention relates to local communication systems for the integrated two-way transmission of speech and digital data to and from a plurality of stations. It is also concerned with apparatus for use in such a system.

It has been proposed, for example in Patent Specification No. 2047048A, for a plurality of telephone sets to be connected to a private automatic branch telephone exchange (PABX) via a twin-conductor cable or loop which provides a unidirectional signal path carrying the required speech signals (in pulse code modulation form) on a plurality of channels in time division multiplex.

With the growth of local area networking there is now a requirement for the stations of such a network to give other services, for example the ability to send and receive data in digital form, in addition to speech. For the purpose of signalling digital data to and from a plurality of stations it is known to connect those stations to a common shared transmission medium but, if the data is transmitted in packet form, care has to be taken to deal with the possibility of 'collision', that is to say one station attempting to transmit

0193376

a packet of data when data is already being transmitted along the path.

One object of the present invention is to provide a local communication system for the integrated two-way transmission of speech and digital data to a from a plurality of stations, and station apparatus for use in such a system, in which the possibility of data 'collision' is avoided under normal operation.

Accordingly from one aspect the invention consists in a station apparatus for use in a local two-way communication system having a first physical signal path for the transmission in one direction of a signal which provides a plurality of circuit-switched channels combined in time division multiplex and which contains channel synchronising information and a second physical signal path which follows substantially the same route as the first path and which is for the broadcast transmission of digital data in packet form, the first and second signal paths having a plurality of ports connected thereto each for connection to the station apparatus, the station apparatus comprising means for receiving and transmitting speech via one of the ports to the first signal path, means for receiving and transmitting digital data via one of the ports to the second signal path, a timing detector for deriving a timing signal from channel synchronising information transmitted over the first signal path, means for detecting the presence of data on the second signal path, and control means which allow the transmission of digital data to the second physical path only on occurrence of said timing signal (or a signal derived therefrom) and if no data is being transmitted on the second signal path.

According to another aspect of the invention, there is provided a communication system comprising a two-way communication system for the integrated transmission of speech and data comprising a first physical signal path for the transmission in one direction of a signal which provides a plurality of circuit-switched channels combined in time division multiplex and which contains channel synchronising information and a second physical signal path which follows substantially the same route as the first path and which is for the broadcast transmission of digital data in packet form, the first and second paths having a plurality of ports connected thereto along the length thereof, and at least one of said ports being connected to station apparatus as set out hereinbefore.

One arrangement of a local communication system for providing two-way speech and data communication to and from a plurality of stations will now be described by way of example with reference to the accompanying drawings, in which

Figure 1 is a diagram of an integrated services local subnet, and

Figure 2 is a block diagram of a station in a local two-way communication system.

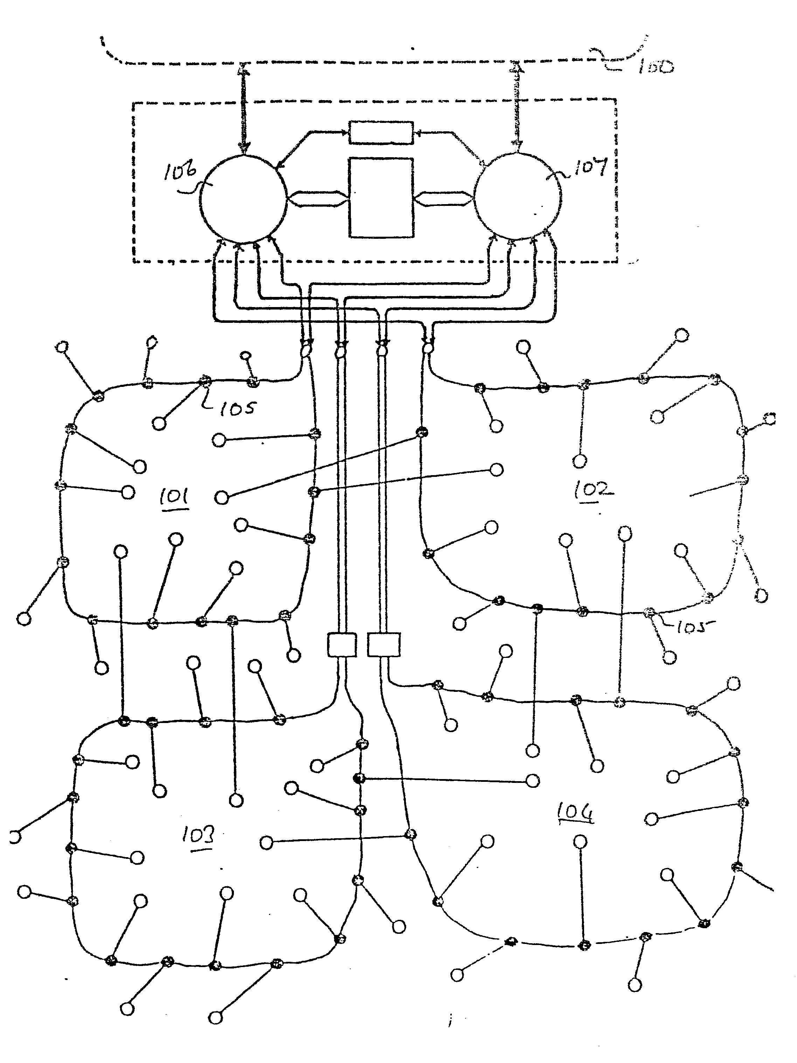

Referring now to Figure 1 of the drawings this shows an integrated services local subnet connected to a backbone network generally indicated at 100. As can be seen the local subnet includes four loops 101, 102, 103 and 104 each having a plurality of similar stations indicated at 105.

The interface between the backbone network 100 and the local subnet includes a circuit switch 106 for handling circuit-switched channels combined in time division multiplex and a packet switch 107 for digital data in packet form.

The communication system around each local subnet comprises two twisted-pair or other two physical media loops which follow the same tortuous route round a building with access ports close to positions where apparatus for handling speech and data may be required. In Figure 1 only one line is shown. One of the two loops (subsequently termed 'the TDM loop') is primarily concerned with transmitting speech signals in pulse code modulation form on a plurality of channels while the other loop (subsequently termed 'the packet loop') is solely concerned with transmitting binary data in packet form.

As in the system described in Patent Specification No. 2047048A, a pair of conductors of a feeder cable from a PABX or similar controller is connected to one end of the TDM loop via a buffer amplifier while the other end of the TDM loop is connected via another buffer amplifier to another pair of conductors of said feeder cable. Thus, during use, a PCM signal is passed round the TDM loop in one direction only although, as will subsequently be apparent, that signal may be modified as it proceeds.

The signal on the TDM loop carries information in binary form coded according to a transmission line code (for example the code HDB3 which has frequent transitions which are desirable to assist bit synchronisation). The signal occupies a succession of thirty-two time slots which are regularly recurrent and of equal duration. One of these time slots contains a characteristic pattern of bits and constitutes a framing or synchronising channel (Channel 0). Thirty of the time slots provide thirty time-multiplexed speech channels (Channels 1 to 30) respectively, each time slot containing information in respect of an octet of bits defining in PCM form the amplitude of a sample of the speech signal being transmitted over the appropriate channel. The last time slot of each sequence of thirty-two time slots is unused and provides a guard period.

The packet loop carries packets of binary data of indeterminate length in known manner, the data being signalled using the so-called Manchester II code so that the binary value of each data bit of a packet is represented by the polarity of a transition in a two-level signal at a succession of regularly recurrent instants of time. The bit rate of the signal on the packet loop is not in any way synchronised with that of the signal in the TDM loop. In known manner each packet of binary data begins with a 'starter' flag consisting of a characteristic group of bits (e.g. '01111110'), then follows the required message (including the address of the station for which the message is intended and possibly also including check bits) and finishes with an 'end' flag again consisting of a characteristic group of bits.

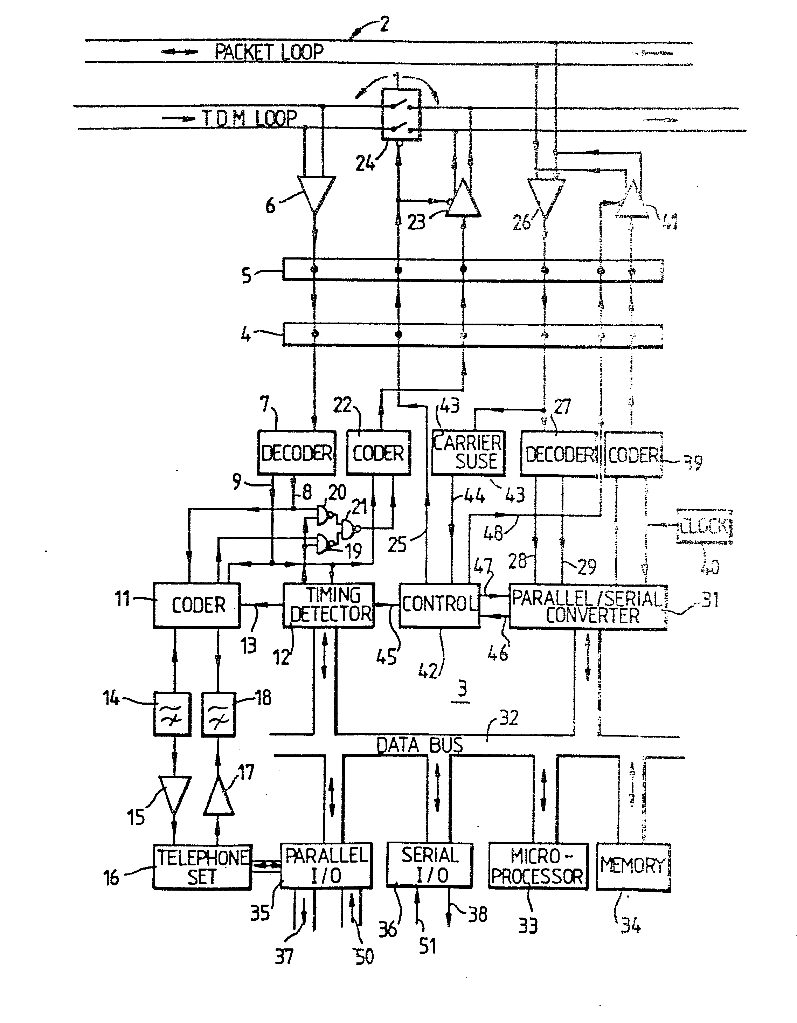

Referring now to Figure 2 of the accompanying drawing which shows part of the TDM and packet loops 1 and 2, the station apparatus 3 corresponds to stations 105 of Figure 1 and has a connector part 4 which mates with a connector part 5 connected to the conductors of the loops 1 and 2 by buffer amplifiers 6, 23, 26 and 41. The connector part 5 constitutes one of the previously mentioned access ports of the system.

The signal on the TDM loop 1 is passed through the amplifier 6 to a decoder 7 which converts the input signal into a simple binary signal (carrying the PCM information of all channels) which is supplied over a lead 8, a bit-rate clock signal also being supplied over a lead 9. The signals on the leads 8 and 9 are passed to a codec 11 and a timing detector 12 which recognises receipt of the characteristic pattern of bits of the synchronising channel and supplies a signal to the codec 11 over a lead 13 characterising the speech channel allocated for communication to and from the station in question, the timing detector 12 having previously been advised of the number of the allocated channel by a message passed over the packet loop 2. An audio signal carrying the incoming speech of the allocated channel is supplied by the codec 11 by way of a low-pass filter 14 and an amplifier 25 to a telephone set 16.

As far as outgoing speech from the telephone set 16 is concerned, the audio signal supplied by the set 16 is passed through an amplifier 17 and a low pass filter 18 to the codec 11 which generates a PCM representation of that signal in the time slots of the appropriate channel. A gate 19 passes this signal supplied by the codec 11 and a gate 20 passes the PCM signal supplied by the decoder 7 in respect of all channels (including Channel 0) except the channel allocated for communication with the station under consideration. The signals passed by the gates 19 and 20 are combined by a gate 21 and the resulting signal is passed to a coder 22 which is arranged to generate a signal of the required coded

0193376

form for supply to the TDM loop 1 via the amplifier 23. This arrangement serves to modify the signal on the TDM loop 1 by replacing the incoming speech on the allocated channel by the outgoing speech, all the other channels being unaffected.

During normal operation the amplifiers 6 and 23 and the decoder 7 and the coder 22 together with the gates 19, 20 and 21 are operative at all times, whether or not the rest of the station is powered up. In this condition the contacts of a relay 24 are open (as shown) and the amplifier 23 is enabled by means of signal supplied over a lead 25. Should power to the station fail for any reason signal on the lead 25 will disappear so as to cause the relay 24 to release and thereby close its contacts (thereby completing the TDM loop 1 as far as the rest of the system is conerned) and disable the amplifier 23.

Signalling from the telephone set 16 to said PABX or other control unit (not shown) for the purpose of setting up and supervising a call is effected by messages passed over the packet loop 2.

Turning now to the packet loop 2, any signal on that loop is passed at the station under consideration through the amplifier 26 to a decoder 27 which supplies over leads 28 and 29 a simple binary signal (carrying the data information) and a clock signal at the data bit rate. The signals on the leads 28 and 29 are passed to a serial-to-parallel converter 31 which is connected to a multi-conductor data bus 32 which is also connected to a microprocessor 33, a memory 34, a parallel input/output unit 35, a serial input/ output unit 36 and the timing detector 12. The microprocessor 33 is arranged in known manner to control the transfer of data via the data bus 32 between the converter 31, the memory 34, the units 35 and 36 and the timing detector 12 (in the latter case for the purpose of advising the identity of an allocated speech channel as previously mentioned). In particular the microprocessor 33 is arranged to recognise the address of each received message and only to pass data received by the converter 31 to the appropriate data output path 37 or 38 of the station via the bus 32 and the unit 35 or 36 or to the timing detector 12 if the message is addressed to that station.

The units 35 and 36 also handle outgoing data messages for transmission to the packet loop 2, the input signal carrying the required data being supplied over either a parallel input data path 50, a serial data path 51 or from the telephone set 16 (for example as supplied by a keypad (not shown) of that set for the purpose of setting up a call). In this case data temporarily stored by the unit 35 or 36 is passed to the converter 31 via the data bus 32 under the control of the microprocessor 33. Subject to action to avoid 'collision' as hereinafter described, the converter 31, now acting as a parallel-to-serial converter, is arranged under these conditions to supply a signal carrying the required message in serial form to a coder 39 together with a data clock signal supplied by a clock 40 (which, although shown in the drawing as a separate item, may conveniently be incorporated in the microprocessor 33). The signal supplied by the coder 39 carries the data message in Manchester II code form and is passed through the amplifier 41 to the packet loop 2.

Initiation of a message transmission as just described is determined by a control unit 42. For this purpose a carrier sensor 43 determines whether or not a message signal is present on the packet loop 2 at any time and only supplies a signal to a lead 44 when no such message is detected. Furthermore the timing detector 12 is arranged to supply a pulse signal to a lead 45 whenever the synchronising channel of the signal on the speech loop 1 is detected thereby, it being remembered that the detector 12 is operative at all times during normal operation and regardless of whether a channel is then allocated for speech to and from the station under consideration. When the converter 31 indicates by a signal on a lead 46 that it has a message to transmit, the control unit 42 waits until signals are present on both the leads 44 and 45 before passing a transmit signal to the converter 31 over a lead 47. At the same time an enabling signal is passed over a lead 48 to the amplifier 41 which is otherwise disabled.

If now the apparatus of all stations of the system are as described above with reference to the accompanying drawing, the instants at which the different stations could commence transmission of a data message are staggered, due to the delay at each station in transmission of the synchronising channel on the TDM loop 1, and it will be appreciated therefore that the possibility of 'collision' on the data loop 2 is avoided. The delay to which reference has just been made is introduced by the decoder 7 and the coder 22, this delay being greater than about two bit periods of the signal on the TDM loop 1 and, when added to the maximum propagation time between adjacent stations, less than eight such bit periods so that (assuming there are for example thirty stations in the system) the total delay in the complete loop is less than the time between successive occurrences of the synchronising channel.

Although the TDM loop 1 in the example described above only carries digitally coded speech, it may alternatively or in addition carry circuit-switched digital data.

In an alternative system using an appropriate time division multiple access line code in whch two different channels are utilised on the TDM loop 1 for transmission to and from a station (as in the system described in Patent Specification No. 2047048A), the relay 24 of each station apparatus may be omitted so as to render the transmission lines completely passive. In such an arrangement, it is necessary for each station apparatus to introduce some delay after receipt of the synchronising channel before permitting a packet of data to be transmitted.

A fundamental point in the foregoing is that only one synchronising channel is in circulation around the TDM loop at any one instant. Also in the system just described each station introduces a delay as it receives the time-multiplexed data, decodes it and retransmits it. It is the presence of this delay which enables the possibility of collisions of data packages to be avoided. In the alternative data communication system in which each station merely notes the arrival of the channel synchronisation data as it passes around the loop, each station must have its own delay means so as to introduce a preset delay before the station attempts to transmit packets of data.

Whilst the description was almost totally concerned with the transmission of speech over the TDM loop, it will be appreciated that other forms of data can easily be transmitted within the same format. Thus wherever reference is made to the reception or transmission of speech data over the TDM loop it will be understood that this is only the most common mode of usage of the system. For example by the addition of an additional coding device it is a relatively simple matter to transmit visual data such as a television picture frame.

## CLAIMS

1. Station apparatus for use in a local two-way communication system having a first physical signal path for the transmission in one direction of a signal which provides a plurality of circuit-switched channels each in time division multiplex and which contains channel synchronising information and a second physical signal path which follows substantially the same route as the first path and which is for the broadcast transmission of digital data in packet form, the first and second signal paths having a plurality of ports connected thereto each for connection to the station apparatus, the station apparatus comprising means for receiving and transmitting speech via one of the ports to the first signal path, means for receiving and transmitting digital data via one of the ports to the second signal path, a timing detector for deriving a timing signal from channel synchronising information transmitted over the first signal path, means for detecting the presence of data on the second signal path, and control means which the transmission of digital data to the second physical path only on occurrence of said timing signal (or a signal derived therefrom) and if no data is being transmitted on the second signal path.

2. Station apparatus as claimed in Claim 1, wherein the means for receiving and transmitting digital data include a decoder for decoding any signal on the second signal path and supplying to a serial-to-parallel converter two signals, one a binary signal carrying the data and the other a clock signal at the data bit rate, the serial-to-parallel converter being connected to a multi-conductor data bus in turn connected to a microprocessor, the microprocessor being operative to control the transfer of data via the data bus between the timing detector and the serial-to-parallel converter.

3.      Station apparatus as claimed in Claim 2, wherein the microprocessor is arranged to recognise the address of each received message and only pass data received by the serial-to-parallel converter to an appropriate data path output or to the timing detector if the message is addressed to the station apparatus.

4.      Station apparatus as claimed in Claim 3, wherein the speech receiving and transmitting means include speech demodulating means operable under the control of said timing signal (or a signal derived therefrom) for demodulating that part of the signal on the first signal path which is associated with the channel allocated to the station apparatus, and means operable under control of the timing signal (or a signal derived therefrom) for deriving a digitally-coded speech signal in respect of speech to be transmitted from the station apparatus and inserting that signal into the channel on the first signal path allocated to the station apparatus.

5.      Station apparatus as claimed in Claim 4, and further including a memory for storing incoming or outgoing data, a parallel input/output unit and a serial input/output unit all connected by the data bus to the microprocessor.

6.      Station apparatus as claimed in any one of Claims 2 to 5, wherein the serial-to-parallel converter is arranged to operate as a parallel-to-serial converter when digital data is to be transmitted, the serial output of the converter being connected to a coder for transmission to the second signal path.

7.      Station apparatus as claimed in Claim 6, and including a clock signal generator for supplying a clock signal to the coder in parallel with the serial data from the converter.

8.      Station apparatus as claimed in Claim 6, wherein the clock signal generator is part of the microprocessor.

9.      Station apparatus as claimed in any one of the preceding claims, and including a control unit connected to the timing detector and to the convertor, the control unit in operation receiving a signal from a carrier sensing unit which acts as the means for detecting the presence of data on the second signal path, and of a signal from the timing detector indicating the detection of the synchronising channel, the control unit providing as one output a signal for inhibiting the transmission of digital data to the second signal path unless there is both absence of data on the second signal path and the presence of the synchronising channel on the first signal path has been detected.

10.     Station apparatus substantially as hereinbefore described with reference to the accompanying drawing.

11.     A two-way communication system for the integrated transmission of speech and data comprising a first physical signal path for the transmission in one direction of a signal which provides a plurality of circuit-switched channels combined in time division multiplex and which contains channel synchronising information and a second physical signal path which follows substantially the same route as the first path and which is for the broadcast transmission of digital data in packet form, the first and second paths having a plurality of ports connected thereto along the length thereof, and at least one of said ports being connected to station apparatus as claimed in any one of the preceding claims.

12.     A communication system as claimed in Claim 11, wherein each port includes an amplifier for amplifying a digital data signal being transmitted onto the second path from a station apparatus connected to the port the operation of the amplifier being enabled or disabled by a signal generated by said control means so as to avoid the possibility of 'collision'

0193376

13. A communication system as claimed in either Claim 11 or Claim 12, wherein at each port the first signal path includes relay means controlled by said control unit, the relay means closing in response to power failure of the associated station apparatus so as to complete the first signal path as far as the rest of the communication system is concerned.

14. A communication system as claimed in any one of Claims 11 to 13, wherein the first signal path includes two different channels for transmission to and from a station using an appropriate time division multiple access line code, and wherein the or each station apparatus includes delay means for introducing a predetermined delay after receipt of the synchronising channel and before permitting the transmission of a packet of data.

0193376

## DOCUMENTS CONSIDERED TO BE RELEVANT

| Category | Citation of document with indication, where appropriate, of relevant passages | Relevant to claim | CLASSIFICATION OF THE APPLICATION (Int Cl ) |
|---|---|---|---|
| A | GB-A-2 131 654 (W.E.C.)<br><br>* Abstract; page 1, lines 48-55,99-116; page 2, lines 7-45 * | 1,3-5, 10,11 | H 04 L  11/20<br>H 04 L  11/16 |
| A | PROCEEDINGS OF THE IEEE INTERNATIONAL CONFERENCE ON COMMUNICATIONS, Philadelphia, US, 13th - 17th June 1982, vol. 3 of 3, pages 6C.1. - 6C.1.5, IEEE, New York, US; J.O. LIMB: "High-speed operation of broadcast local networks"<br>* Page 6C.1.1, left-hand column, lines 29-32; page 6C.1.3, left-hand column, lines 4-11; page 6C.1.4, left-hand column, lines 24-34 * | 1,9,14 | |
| A | ELECTRONICS DESIGN, vol. 32, no. 15. July 1984, pages 128-136,138,140,142,144,146,148, Waseca, MN, Denville, NJ, US; R. ALLAN: "LAN's stake their claims and opt for coexistence"<br>* Page 138, right-hand column, lines 28-43 * | 1,10, 11 | TECHNICAL FIELDS SEARCHED (Int Cl )<br><br>H 04 L<br>H 04 M<br>H 04 Q |
| A | WO-A-8 404 435 (CXC)<br>* Page 23, lines 13-20 *<br><br>--- -/- | 1,11 | |

The present search report has been drawn up for all claims

| Place of search | Date of completion of the search | Examiner |
|---|---|---|
| THE HAGUE | 29-05-1986 | VAN DEN BERG, J.G.J. |

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | ELEKTRONIK, vol. 31, no. 8, April 1982, pages 67-70, Munich, DE; H. EING et al.: "Das SP-Netz - ein neues, viel-versprechendes lokales Netzwerk (LAN)" * Page 68, right-hand column, lines 5-22 * | 2,5-7 | |
| | --- | | |
| A | ELECTRONICS DESIGN, vol. 32, no. 15, July 1984, pages 171-176,178, Waseca, MN, Denville, NJ, US; W. BOURGONJE: "Twisted-pair bus carries speech, data, text, and images" * Page 173, left-hand column, line 6 - right-hand column, line 7; page 173, right-hand column, line 30 - page 174, left-hand column, line 14; page 175, left-hand column, line 2 - page 176, left-hand column, line 14; page 176, right-hand column, line 21 - page 178, left-hand column, line 22 * | 1-11, 14 | TECHNICAL FIELDS SEARCHED (Int. Cl 4) |
| | --- | | |
| A | ELECTRICAL DESIGN NEWS, vol. 17, no. 6, 15th March 1972, pages 44-46; D. PIPPENGER: "Line drivers are not limited to computer systems" * Page 44, right-hand column, line 3 - page 46, left-hand column, line 4 * | 12 | |
| | ---      -/- | | |

The present search report has been drawn up for all claims

| Place of search THE HAGUE | Date of completion of the search 29-05-1986 | Examiner VAN DEN BERG, J.G.J. |
|---|---|---|

European Patent
Office

**EUROPEAN SEARCH REPORT**

**0193376**
Application number

EP 86 30 1325

| | DOCUMENTS CONSIDERED TO BE RELEVANT | | Page 3 |
|---|---|---|---|
| Category | Citation of document with indication, where appropriate, of relevant passages | Relevant to claim | CLASSIFICATION OF THE APPLICATION (Int Cl 4) |
| A | JOURNAL OF TELECOMMUNICATION NETWORKS, vol. 1, no. 4, 1982, pages 349-370, Rockville, Maryland, US; K. KÜMMERLE et al.: "Local-area communication networks - an overview" * Page 366; figure 15 * | 13 | |
| A | GB-A-2 047 048 (G.E.C.) * Abstract * | 14 | |
| | | | TECHNICAL FIELDS SEARCHED (Int. Cl.4) |

The present search report has been drawn up for all claims

| Place of search THE HAGUE | Date of completion of the search 29-05-1986 | Examiner VAN DEN BERG,J.G.J. |
|---|---|---|